**Europäisches Patentamt**

**European Patent Office**

**Office européen des brevets**

(11) Veröffentlichungsnummer: **0 184 825 B1**

# EUROPÄISCHE PATENTSCHRIFT

(45) Veröffentlichungstag der Patentschrift: **10.04.91**

(51) Int. Cl.⁵: **B23K 35/363**

(21) Anmeldenummer: **85115738.8**

(22) Anmeldetag: **10.12.85**

(54) **Halogenfreie Schaumflussmittel.**

(30) Priorität: **14.12.84 DE 3445624**

(43) Veröffentlichungstag der Anmeldung:
**18.06.86 Patentblatt  86/25**

(45) Bekanntmachung des Hinweises auf die
Patenterteilung:
**10.04.91 Patentblatt  91/15**

(84) Benannte Vertragsstaaten:
**AT BE CH DE FR GB IT LI LU NL SE**

(56) Entgegenhaltungen:
**EP-A- 0 090 960**
**WO-A-80/02663**
**CH-A- 596 935**
**DE-A- 2 828 197**
**US-A- 3 723 191**

(73) Patentinhaber: **alpha grillo-lötsysteme GmbH**
**Buschstrasse 95 Postfach 11 01 26**
**W-4100 Duisburg 11(DE)**

(72) Erfinder: **Froebel, Gerd, Dipl.-Ing.**
**Sengelsweg 29**
**W-4000 Düsseldorf 31(DE)**
Erfinder: **Stang, Hans W.**
**Droste-Hülshoff-Strasse 18**
**W-4100 Duisburg 11(DE)**

(74) Vertreter: **Werner, Hans-Karsten, Dr. et al**
**Deichmannhaus am Hauptbahnhof**
**W-5000 Köln 1(DE)**

# EP 0 184 825 B1

**Beschreibung**

Gegenstand der vorliegenden Erfindung sind halogenfreie Schaumflußmittel zum maschinellen Weichlöten von Schwermetallen bestehend aus einem Lösungsmittel, einem Aktivator auf Basis einer oder mehrerer Dicarbonsäuren mit 4 bis 12 C-Atomen, gegebenenfalls Kolophonium und/oder dem Kolophonium ähnliche natürliche, modifizierte oder vollsynthetische Harze, Wachse und deren Gemische sowie einem Schäumer.

Flußmittel zum maschinellen Weichlöten von Schwermetallen sind bekannt und werden je nach den Anforderungen in den verschiedensten Qualitäten angeboten. Die verschiedenen Kategorien sind in der DIN 8511 zusammengefaßt. An Flußmittel für das maschinelle Löten von Leiterplatten werden besondere Anforderungen gestellt, insbesondere wenn es sich um Leiterplatten für die Nachrichtentechnik, die Datenverarbeitung, die Verteidigung und die Raumfahrt handelt. Insbesondere die Korrosionsbeständigkeit mit oder ohne nachfolgende Reinigung sowie die immer häufiger angewandte In-Line-Circuit-Testung stellen neue und erhöhte Anforderungen an die Flußmittel.

Die Auftragung der Flußmittel erfolgt durch Eintauchen, Besprühen oder Schäumen. Sowohl beim Eintauchen wie beim Besprühen werden auch die Löcher von gelochten Leiterplatten dem Flußmittel ausgesetzt, was zu erheblichen Störungen führt. Es ist deshalb bei diesen Methoden notwendig, die Löcher zuvor abzudecken oder in sonstiger Form vor dem Flußmittel zu schützen. Vorzugsweise werden daher in zunehmendem Maße Schaumflußmittel eingesetzt. Die Schaumflußmittel werden beispielsweise durch Einblasen von Luft durch einen porösen Stein aufgeschäumt und in Form dieses Schaumes auf die Leiterplatten aufgetragen. Schaumflußmittel bestehen daher nach dem Stand der Technik aus einem Lösungsmittel, einem Aktivator auf Basis einer oder mehrerer Dicarbon säuren mit 4 bis 12 C-Atomen, Kolophonium und/oder dem Kolophonium ähnliche natürliche, modifizierte oder vollsynthetische Harze, Wachse und deren Gemische sowie einem Schäumer. Flußmittel, insbesondere auch Schaumflußmittel für korrosions empfindliche Leiterplatten werden vorzugsweise halogen frei hergestellt, da halogenhaltige Flußmittel stärkerem Maße zur Korrosion neigen.

Die bisher bekannten halogenfreien Schaumflußmittel weisen einen relativ hohen Gesamtfeststoffgehalt und Gehalt an Schäumern auf. Die meisten bekannten Flußmittel weisen Konzentrationen von ca. 10 bis 30 Gew.-% auf. Allein der Kolophoniumgehalt beträgt meist 6 oder mehr Gew.-%. Der hohe Gehalt an Kolophonium wirkt zwar korrosionsinhibierend, da er die Metallteile mit einem dünnen, wasserunlöslichen Film überzieht. Da in ihm jedoch auch die Schwermetallsalze der organischen Säuren gelöst bzw. suspendiert sind, führt diese Schicht bei hochwertigen Leiterplatten zu unerwünschten Restleitfähigkeiten und Störungen. Insbesondere stört der Kolophoniumfilm die heute übliche In-Line-Circuit-Testung.

In der europäischen Patentanmeldung EP-A-0 090 960 (83 102 353) sind Flußmittel beschrieben, die halogen- und kolophoniumfrei sind und daher geeignet erscheinen, für hochwertige Leiterplatten eingesetzt zu werden. Die eingehende Überprüfung dieser Flußmittel hat jedoch gezeigt, daß auch hierbei Restbedeckungen mit ionisierbaren Rückständen entstehen, die entweder zu Störungen führen oder aber nachträglich abgewaschen werden müssen. Ein weiterer Nachteil der dort beschriebenen Flußmittel besteht darin, daß sie aufgesprüht werden müssen und nicht als Schaumflußmittel eingesetzt werden können.

Die Erfindung hat sich die Aufgabe gestellt, halogen freie Schaumflußmittel zum maschinellen Weichlöten von Schwermetallen zu entwickeln, die höchsten Anforderungen bezüglich der erzielten Qualität der Leiterplatten genügen, einfach und zuverlässig in Form eines Schaumes aufgetragen werden können und mit Sicherheit keine korrodierenden Rückstände hinterlassen, wobei auch die In-Line-Circuit-Testung problemlos durchführbar ist.

Diese Aufgabe konnte überraschenderweise gelöst werden, durch halogenfreie Schaumflußmittel zum maschinellen Weichlöten von Schwermetallen bestehend aus einem Lösungsmittel, einem Aktivator auf Basis einer oder mehrerer Dicarbonsäuren mit 4 bis 12 C-Atomen, gegebenenfalls Kolophonium und/oder dem Kolophonium ähnliche natürliche, modifizierte oder vollsynthetische Harze, Wachse und deren Gemische sowie einem Schäumer, gekennzeichnet durch

    a) einen Gehalt an Aktivatoren unter 3,5 Gew.-%,
    b) einen Gehalt an Kolophonium und/oder dem Kolophonium ähnliche natürliche, modifizierte oder vollsynthetische Harze, Wachse und deren Gemische bis 2 Gew.-%,
    c) einen Gehalt an Schäumer von 0,2 bis 3 Gew.-% und
    d) einen Gesamtfeststoff- und Schäumergehalt unter 6 Gew.-%.

Besonders bevorzugt sind nicht ionogene oberflächenaktive Stoffe, da die Schaumhöhe ionogener oberflächenaktiver Stoffe dazu neigt, durch den pH-Wert beeinflußt zu werden. Besonders bevorzugt sind daher als Schäumer Polyglykole, hochmolekulare Ester, Polyether, Ethoxylate oder Gemische derselben.

Besonders überraschend ist, daß durch einen Gehalt von 0,2 bis 2 Gew.-% Kolophonium zusätzlich zu den genannten Schäumern Schaumflußmittel entstehen, die zwar alle Vorteile der hochkolophoniumhaltigen

2

EP 0 184 825 B1

Flußmittel, nicht aber deren Nachteile aufweisen.

Als Lösungsmittel kommen alle üblichen organischen Hilfsmittel für Flußmittel in Frage. In erster Linie ist hier Propanol-2 zu nennen, aber auch andere niedere einwertige Alkohole und Gemische derselben kommen in Frage. So sind beispielsweise Gemische von Propanol-2, n-Propanol, Ethanol gut einsetzbar, darüberhinaus Zusätze von Polydiolen, Glykolethern, Dimethylformamid usw.

Als Aktivatoren kommen die üblicherweise eingesetzten Dicarbonsäuren mit 4 bis 12 C-Atomen in Frage, und zwar alleine oder in Gemischen. Besonders bewährt haben sich Gemische aus niedermolekularen und hochmolekularen Dicarbonsäuren. In der Praxis bewährt haben sich insbesondere die Dicarbonsäuren mit einer geraden Anzahl von C-Atomen, weil im Bereich niedriger C-Atome deren Löslichkeit deutlich geringer ist. Jedoch sind insbesondere bei den höheren Dicarbonsäuren in gleicher Weise auch solche mit einer ungeraden C-Atomzahl einsetzbar. Kolophonium ist bekanntlich ebenfalls eine allerdings polycyclische Carbonsäure mit einer großen Anzahl von C-Atomen. Natürliches Kolophonium ist in der letzten Zeit auch durch andere teils lösliche teils unlösliche Harze und Wachse und deren Gemische ersetzt worden. Erfindungsgemäß können somit nicht nur Kolophonium sondern auch die üblichen Zusätze verwendet werden. Besonders geeignet sind natürliche oder modifizierte natürliche Harze sowie vollsynthetische Harze mit einer ausreichenden Anzahl freier Carbonsäure, die bezüglich ihrer thermischen Stabilität, ihrer Schmelzpunkte und ihrer Fließeigenschaften dem Kolophonium ähneln.

Erfindungsgemäß soll der Gehalt an Aktivatoren unter 3,5 liegen und vorzugsweise im Bereich zwischen 2 und 3% liegen. Der Gehalt an Kolophonium darf nicht über 2 Gew.-% liegen, da sonst mit den bekannten Störungen beim In-Line-Circuit-Test zu rechnen ist. Besonders bevorzugt sind daher Mengen zwischen 0,2 und 1 Gew.-% Kolophonium. Der Gehalt an Schäumern muß erfindungsgemäß zwischen 0,2 und 3 Gew.-% liegen. Besonders bevorzugt sind Mengen zwischen 0,5 und 1,5 Gew.-%. Zu niedrige Mengen führen zu keiner ausreichenden Stabilisierung des Schaumes, während zu hohe Mengen an Schäumern zu unerwünschten Rückständen auf den Leiterplatten führen.

Von weiterer entscheidender Bedeutung ist, daß der Gesamtfeststoff und Schäumergehalt unter 6 Gew.-% liegt, da nur bei so niedrigem Gesamtfeststoff und Schäumergehalten unerwünschte Rückstände und Störungen des In-Line-Circuit-Tests vermieden werden können. Überraschenderweise ist es erfindungsgemäß trotzdem möglich, halogenfreie Schaumflußmittel herzustellen, die eine einwandfreie und fehlerfreie Lötung ermöglichen und dennoch keine Korrosionen erzeugen und keine unerwünschten Rückstände auf der Leiterplatte hinterlassen. Insbesondere durch den Zusatz von Kolophonium werden offensichtlich auch die Metallsalze der höheren Dicarbonsäuren im Kolophonium ausreichend gelöst, so daß sie aus dem Flußmittel nicht ausfallen und nicht durch Siebe oder sonstige Maßnahmen entfernt werden müssen. Die geringen Mengen an Kolophonium reichen andererseits nicht mehr aus, einen die In-Line-Circuit-Testung störenden Film auf der Leiterplatte zu hinterlassen. Die geringen Mengen des Flußmittels werden offensichtlich vollständig von der Lötwelle aufgenommen und entfernt.

In den nachfolgenden Beispielen sind einige typische Zusammensetzungen der erfindungsgemäßen Schaumflußmittel zusammengestellt.

### B e i s p i e l   1

| | |
|---|---|
| Adipinsäure | 1,5 Gew.-% |
| Sebazinsäure | 0,5 Gew.-% |
| Polyethylenglykol-monolaurat | 1,2 Gew.-% |
| Kolophonium | 0,8 Gew.-% |
| Gesamtfeststoff und Schäumergehalt | 4,0 Gew.-% |
| Propanol-2 | 50,0 Gew.-% |
| Ethanol | 46,0 Gew.-% |

Dieses Gemisch zeigte als Schaumflußmittel ausgezeichnete Eigenschaften als Flußmittel ohne Rückstände und Korrosion und ohne Fehleranzeigen beim In-Line-Circuit-Test.

3

## B e i s p i e l   2

| | |
|---|---|
| Bernsteinsäure | 1,6 Gew.-% |
| Sebazinsäure | 0,6 Gew.-% |
| Polyethoxyalkanol | 1,5 Gew.-% |
| Kolophonium | 1,0 Gew.-% |
| Gesamtfeststoff und Schäumergehalt | 4,7 Gew.-% |
| Propanol-2 | 45,0 Gew.-% |
| Ethanol | 44,3 Gew.-% |
| Ethoxyethanol | 5,0 Gew.-% |

Auch dieses Gemisch zeigte ausgezeichnete Eigenschaften.

## B e i s p i e l   3

| | |
|---|---|
| Adipinsäure | 1,2 Gew.-% |
| Korksäure | 0,8 Gew.-% |
| Hexylenglykol | 1,6 Gew.-% |
| Kolophonium | 0,4 Gew.-% |
| Gesamtfeststoff und Schäumergehalt | 4,0 Gew.-% |
| | |
| Propanol-2 | 80,0 Gew.-% |
| n-Propanol | 16,0 Gew.-% |

Auch dieses Gemisch zeigt ausgezeichnete Eigenschaften als Schaumflußmittel.

## B e i s p i e l   4

| | |
|---|---|
| Adipinsäure | 1,0 Gew.-% |
| Korksäure | 1,0 Gew.-% |
| Polyethylenglykol 200 | 1,3 Gew.-% |
| Kolophonium | 0,7 Gew.-% |
| Gesamtfeststoff und Schäumergehalt | 4,0 Gew.-% |
| Propanol-2 | 75,0 Gew.-% |
| n-Propanol | 16,0 Gew.-% |
| 2-(2-n-Butoxyethoxy)ethanol | 5,0 Gew.-% |

Auch dieses Gemisch zeigt ausgezeichnete Eigenschaften.

B e i s p i e l 5

| | |
|---|---|
| Adipinsäure | 1,6 Gew.-% |
| Sebazinsäure | 0,4 Gew.-% |
| Polyethoxyalkanol | 1,5 Gew.-% |
| Polywachs 2000 | 0,5 Gew.-% |
| Gesamtfeststoff und Schäumer-<br>gehalt | 4,0 Gew.-% |
| Propanol-2 | 75,0 Gew.-% |
| Ethoxyethanol | 7,5 Gew.-% |
| Ethanol | 13,5 Gew.-% |

Auch dieses Gemisch hat bezüglich Schaumbildung und Lötfähigkeit sowie Rückstandsfreiheit gute Eigenschaften, ist aber im Gegensatz zu den vorherigen Beispielen voll wasserlöslich.

B e i s p i e l 6

| | |
|---|---|
| Citronensäure | 2,0 Gew.-% |
| Fumarsäure | 0,5 Gew.-% |
| Polyethylenglykol-monolaurat | 1,0 Gew.-% |
| Oxydwachs A | 1,5 Gew.-% |
| Gesamtfeststoff- und Schäumer-<br>gehalt | 5,0 Gew.-% |
| n-Propanol | 40,0 Gew.-% |
| Ethylenglykol | 15,0 Gew.-% |
| 2-Butoxyethanol | 10,0 Gew.-% |
| Propanol-2 | 30,0 Gew.-% |

Auch dieses Gemisch mit ausgezeichneten Eigenschaften ist voll wasserlöslich.

**Ansprüche**

1. Halogenfreie Schaumflußmittel zum maschinellen Weichlöten von Schwermetallen bestehend aus einem Lösungsmittel, einem Aktivator auf Basis einer oder mehrerer Dicarbonsäuren mit 4 bis 12 C-Atomen, gegebenenfalls Kolophonium und/oder dem Kolophonium ähnliche natürliche, modifizierte oder vollsynthetische Harze, Wachse und deren Gemische sowie einem Schäumer, gekennzeichnet durch
   a) einen Gehalt an Aktivatoren unter 3,5 Gew.-%,
   b) einen Gehalt an Kolophonium und/oder dem Kolophonium ähnliche natürliche, modifizierte oder vollsynthetische Harze, Wachse und deren Gemische bis 2 Gew.-%.
   c) einen Gehalt an Schäumer von 0,2 bis 3 Gew.-% und
   d) einen Gesamtfeststoff- und Schäumergehalt unter 6 Gew.-%.

2. Schaumflußmittel gemäß Anspruch 1, dadurch gekennzeichnet, daß als Schäumer nicht ionogene oberflächenaktive Stoffe verwendet werden.

3. Schaumflußmittel gemäß Anspruch 1 oder 2, dadurch gekennzeichnet, daß als Schäumer Polyglykole, hochmolekulare Ester, Polyether, Ethoxylate oder Gemische derselben verwendet werden.

4. Schaumflußmittel gemäß einem der Ansprüche 1 bis 3, dadurch gekennzeichnet, daß der Gehalt an Kolophonium und/oder den Kolophorium ähnliche natürliche, modifizierte oder vollsynthetische Harze, Wachse und deren Gemische 0,2 bis 1 Gew.-% beträgt.

## Claims

1. Halogen-free foam fluxes for mechanized soft soldering of heavy metals consisting of a solvent, an activator based on one or more dicarboxylic acids having from 4 to 12 carbon atoms, optionally rosin and/or natural, modified or fully synthetic resins, waxes and mixtures thereof which are similar to rosin, as well as a foaming agent, characterized by
   a) an activator content of less than 3.5% by weight;
   b) a content of rosin and/or natural, modified or fully synthetic resins, waxes and mixtures thereof which are similar to rosin of up to 2% by weight;
   c) a content of the foaming agent of from 0.2 tc 3% by weight; and
   d) a total contents of solids and foaming agent of less than 6% by weight.

2. The foam fluxes according to claim 1, characterized in that non-ionic surfactants are used as the foaming agent.

3. The foam fluxes according to claim 1 or claim 2, characterized in that polyglycols, high molecular weight esters, polyethers, ethoxylates or mixtures thereof are used as the foaming agent.

4. The foam fluxes according to any one of claims 1 to 3, characterized in that the rosin content and/or content of natural, modified or fully synthetic resins, waxes and mixtures thereof which are similar to rosin is from 0.2 to 1% by weight.

## Revendications

1. Flux moussant exempt d'halogène pour le brasage tendre de métaux lourds, constitué d'un solvant, d'un activateur à base d'un ou plusieurs acides dicarboxyliques à 4 à 12 atomes de carbone, éventuellement de la colophane et/ou des résines naturelles, modifiées, ou complètement synthétiques analogues à la colophane, des cires et leurs mélanges, ainsi qu'un agent moussant, caractérisé par :
   a) une teneur en activateur inférieure à 3,5% en poids,
   b) une teneur en colophane et/ou résines naturelles,modifiées ou complètement synthétique analogues à la colophane, cires et leurs mélanges de jusqu'à 2% en poids,
   c) une teneur en agent moussant de 0,2 à 3 % en poids,
   d) une teneur totale en matière solide et agent moussant inférieure à 6% en poids.

2. Flux moussant selon la revendication 1, caractérisé en ce qu'on utilise des substances tensioactives non-ionogènes.

3. Flux moussant selon la revendication 1 ou 2, caractérisé en ce qu'on utilise, comme agent moussant, des polyglycols, des esthers à masse moléculaire élevée, des polyéthers, des éthoxylates ou des mélanges de ces corps.

4. Flux moussant selon l'une des revendications 1 à 3, caractérisé en ce que la teneur en colophane et/ou résines naturelles, modifiées ou complètement synthétiques, analogues à la colophane, cires et leurs mélanges est de 0,2 à 1% en poids.